# FASCICULE DE BREVET EUROPEEN

(11) **EP 3 309 078 B1**
(45) Date de publication et mention de la délivrance du brevet: **05.06.2019**
(21) Numéro de dépôt: 17194690.8
(22) Date de dépôt: 04.10.2017
(51) Int. Cl.: B64D 33/02

(54) **NACELLE D'AERONEF COMPRENANT UNE LIAISON ENTRE UN CONDUIT D'UNE ENTREE D'AIR ET UN CONDUIT D'UNE MOTORISATION**
LUFTFAHRZEUGGONDEL, DIE EINE VERBINDUNG ZWISCHEN EINER LUFTLEITUNG UND EINER MOTORISIERUNGSLEITUNG UMFASST
AIRCRAFT NACELLE COMPRISING A CONNECTION BETWEEN AN AIR INTAKE DUCT AND AN ENGINE DUCT

(30) Priorité: 13.10.2016 FR 1659899
(43) Date de publication de la demande: 18.04.2018
(73) Titulaire: Airbus Operations SAS, 31060 Toulouse (FR)
(72) Inventeur: PORTE, Alain, 31770 COLOMIERS (FR); VINCHES, Frédéric, LARRA (FR)
(74) Mandataire: Fantin, Laurent

(56) Documents cités:
- EP-A2- 0 057 621
- EP-A2- 2 241 504
- FR-A1- 2 926 789
- FR-A1- 2 954 282

## Description

La présente invention se rapporte à une nacelle d'aéronef comprenant une liaison entre un conduit d'une entrée d'air et un conduit d'une motorisation.

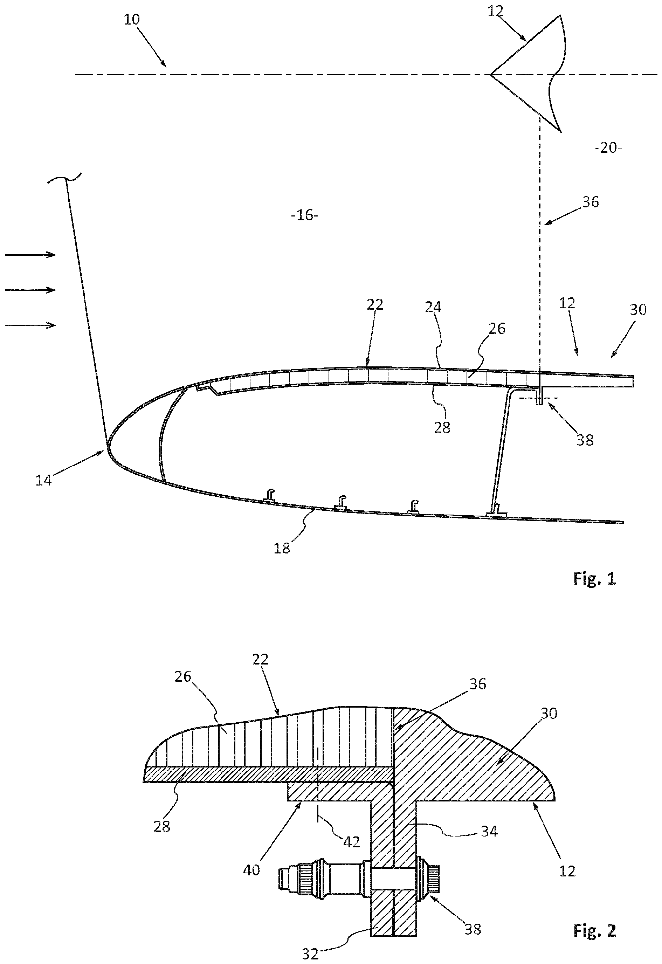

Comme illustré sur la figure 1, une nacelle d'aéronef comprend à l'avant une entrée d'air 10 permettant de canaliser un flux d'air en direction d'une motorisation 12.

Pour la suite de la description, la direction longitudinale correspond à la direction de l'axe de la motorisation. Un plan longitudinal est un plan qui contient l'axe de la motorisation. Un plan transversal est un plan perpendiculaire à l'axe de la motorisation. Une direction radiale est une direction perpendiculaire à l'axe de la motorisation. Les termes avant et arrière font référence au sens d'écoulement du flux d'air dans la nacelle. L'avant correspond à une zone où le flux d'air rentre dans la nacelle et l'arrière à une zone où le flux d'air sort de la nacelle. L'entrée d'air 10 comprend une lèvre 14 qui est prolongée à l'intérieur de la nacelle par un premier conduit 16 de sections sensiblement circulaires, et à l'extérieur de la nacelle par une paroi extérieure 18 de sections sensiblement circulaires. La motorisation comprend un deuxième conduit 20 susceptible d'être disposé dans le prolongement du conduit intérieur 16.

Selon un mode de réalisation, le premier conduit 16 est délimité par des panneaux acoustiques 22 juxtaposés sur toute la circonférence du premier conduit 16 et qui comprennent chacun, selon la direction radiale, en s'écartant de l'axe de la motorisation, une couche acoustiquement résistive 24, au moins une couche alvéolaire 26 et une couche réflectrice 28.

Pour la présente demande, on entend par couche aussi bien une couche qu'une pluralité de couches superposées.

Le deuxième conduit 20 est également délimité par des panneaux 30 juxtaposés sur toute la circonférence du deuxième conduit 20.

Comme illustré sur la figure 2, l'entrée d'air 10 est reliée à la motorisation 12 par une liaison qui comprend une première collerette annulaire 32 reliée au premier conduit 16 et une deuxième collerette annulaire 34 solidaire du deuxième conduit 20. Les deux collerettes annulaires 32 et 34 sont plaquées l'une contre l'autre au niveau d'un plan de jonction 36 sensiblement perpendiculaire à la direction longitudinale et maintenues ainsi par des éléments de liaison 38, par exemple des boulons ou des rivets, qui traversent les collerettes annulaires 32, 34 et dont les axes sont parallèles à la direction longitudinale.

La première collerette 32 correspond à une première aile d'une première bride 40 en L dont la seconde aile est reliée à la couche réflectrice 28. Seule la première bride 40 en L est métallique. Le panneau acoustique, et notamment la couche réflectrice 28, est réalisé en matériau composite ce qui permet de réduire la masse embarquée. La liaison entre l'entrée d'air et la motorisation comprend une première série d'éléments de liaison 38 reliant les première et deuxième collerettes annulaires 32 et 34 et une deuxième série d'éléments de liaison 42 reliant la première bride 40 en L et les panneaux acoustiques 22 du premier conduit 16.

Les panneaux 30 du deuxième conduit 20 peuvent également être en matériau composite. Dans ce cas, comme pour la première collerette annulaire 32, la deuxième collerette annulaire 34 est intégrée à une deuxième bride en L métallique. Dans ce cas, la liaison entre l'entrée d'air et la motorisation comprend une première série d'éléments de liaison reliant les première et deuxième brides en L, une deuxième série d'éléments de liaison reliant la première bride en L et les panneaux acoustiques du premier conduit 16 et une troisième série d'éléments de liaison reliant la deuxième bride en L et les panneaux 30 du deuxième conduit 20. Dans ce cas, le gain de masse généré par l'utilisation des matériaux composites pour les panneaux 30 du deuxième conduit 20 est réduit en raison de la présence de trois séries d'éléments de liaison.

Selon un autre inconvénient, quel que soit le mode de réalisation, les éléments de liaison 38, 42 sont accessibles uniquement depuis l'extérieur de la nacelle, ce qui impose de prévoir des capots démontables au niveau de la paroi extérieure 38 pour accéder auxdits éléments de liaison 38, 42.

Le document EP57621 décrit une garniture insonorisante pour un conduit d'une soufflante de turboréacteur. Selon ce document, un conduit est équipé d'une garniture composée d'une pluralité de panneaux qui sont juxtaposés sur la circonférence du conduit et qui sont reliés au conduit par des boulons qui traversent chacun une entretoise et une rondelle. Chaque boulon comprend une tête accessible depuis l'intérieur du conduit, un écrou et une rondelle de freinage. Cette rondelle de freinage permet d'éviter que le boulon se dévisse en fonctionnement. Pour assurer le serrage de chaque boulon, il est nécessaire d'avoir accès à la tête et à l'écrou si bien que des capots démontables sont nécessaire pour accéder aux écrous des boulons.

Le document FR 2 954 282 décrit une nacelle d'aéronef et montre le préambule de la revendication 1.

La présente invention propose de remédier aux inconvénients de l'art antérieur.

A cet effet, l'invention a pour objet une nacelle d'aéronef selon la revendication 1.

Selon l'invention, l'entrée d'air et la motorisation sont reliées par une seule série d'éléments de liaison et le conduit de l'entrée d'air, le conduit de la motorisation et le manchon sont réalisés en matériau composite. Selon un autre aspect, les éléments de liaison peuvent être mis en place et serrés depuis uniquement l'intérieur des conduits ce qui permet de supprimer les capots mobiles prévus sur la paroi extérieure de la nacelle contribuant ainsi à réduire la masse embarquée.

Selon une autre caractéristique, le premier conduit comprend au moins un panneau acoustique qui comporte selon la direction radiale, en s'écartant de l'axe de la motorisation, une couche acoustiquement résistive, au moins une couche alvéolaire et une couche réflectrice et pour chaque élément de liaison, au moins la couche acoustiquement résistive et la couche alvéolaire comprennent un évidement configuré pour loger la tête de l'élément de liaison.

Selon une première variante, chaque panneau acoustique comprend, pour chaque évidement, un bouchon relié au panneau acoustique et pourvu d'une surface positionnée dans le prolongement d'une surface intérieure du panneau acoustique.

Selon une deuxième variante, chaque évidement comprend un chant périphérique avec une section sensiblement égale à une section de la tête de l'élément de liaison, la tête de l'élément de liaison comprenant une surface positionnée dans le prolongement d'une surface intérieure du panneau acoustique, un joint torique étant intercalé entre l'élément de liaison et le chant périphérique de l'évidement.

Selon une autre caractéristique, la liaison comprend au moins une lame de liaison configurée pour relier le premier conduit et le manchon et disposée entre le premier conduit et le manchon, chaque lame de liaison comprenant au moins une première zone de jonction configurée pour relier la lame de liaison et le manchon et qui est écartée du premier conduit selon la direction radiale et au moins une deuxième zone de jonction configurée pour relier la lame de liaison et le premier conduit et qui est décalée selon la direction longitudinale par rapport à la première zone de jonction.

Selon une autre caractéristique, chaque lame de liaison est configurée pour se déformer en fonctionnement de manière élastique selon la direction radiale.

Selon une autre caractéristique, chaque lame de liaison comprend une troisième zone de jonction configurée pour relier la lame de liaison et le premier conduit, les deuxième et troisième zones de jonction étant disposées de part et d'autre de la première zone de jonction.

Selon une autre caractéristique, les deuxièmes zones de jonction sont disposées à l'avant de la nacelle par rapport aux premières zones de jonction et chaque lame de liaison comprend un bord orienté vers l'arrière de la nacelle qui est libre.

Selon une autre caractéristique, chaque lame de liaison comprend un bord orienté vers le deuxième conduit recourbé.

L'invention a également pour objet un aéronef comprenant une nacelle conforme à l'invention.

D'autres caractéristiques et avantages ressortiront de la description de l'invention qui va suivre de l'invention, description donnée à titre d'exemple uniquement, en regard des dessins annexés sur lesquels :
- la figure 1 est une coupe d'une partie inférieure et avant d'une nacelle d'un aéronef qui illustre un mode de réalisation de l'art antérieur,
- la figure 2 est une coupe d'une liaison entre une entrée d'air et une motorisation qui illustre un mode de réalisation de l'art antérieur,
- la figure 3A est une coupe d'une partie inférieure et avant d'une nacelle d'un aéronef qui illustre une première variante de l'invention,
- la figure 3B est une coupe illustrant en détail la première variante visible sur la figure 3A en cours de démontage,
- la figure 4 est une coupe longitudinale d'une liaison entre une entrée d'air et une motorisation qui illustre en détail une variante de l'invention,
- la figure 5 est une coupe selon la ligne V-V de la figure 4,
- la figure 6 est une coupe d'une partie supérieure et avant d'une nacelle d'un aéronef qui illustre une autre variante de l'invention,
- la figure 7 est une coupe longitudinale d'une liaison entre une entrée d'air et une motorisation qui illustre en détail la variante visible sur la figure 6,
- la figure 8 est une coupe longitudinale d'une liaison entre une entrée d'air et une motorisation qui illustre en détail une autre variante de l'invention,

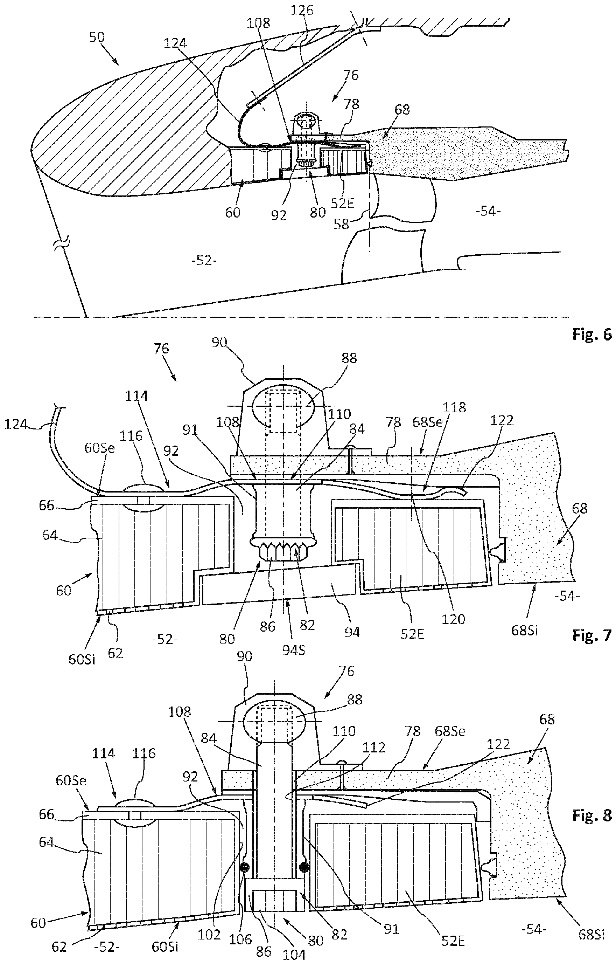

- la figure 8 est une coupe d'une partie supérieure et avant d'une nacelle d'un aéronef qui illustre une autre variante de l'invention,

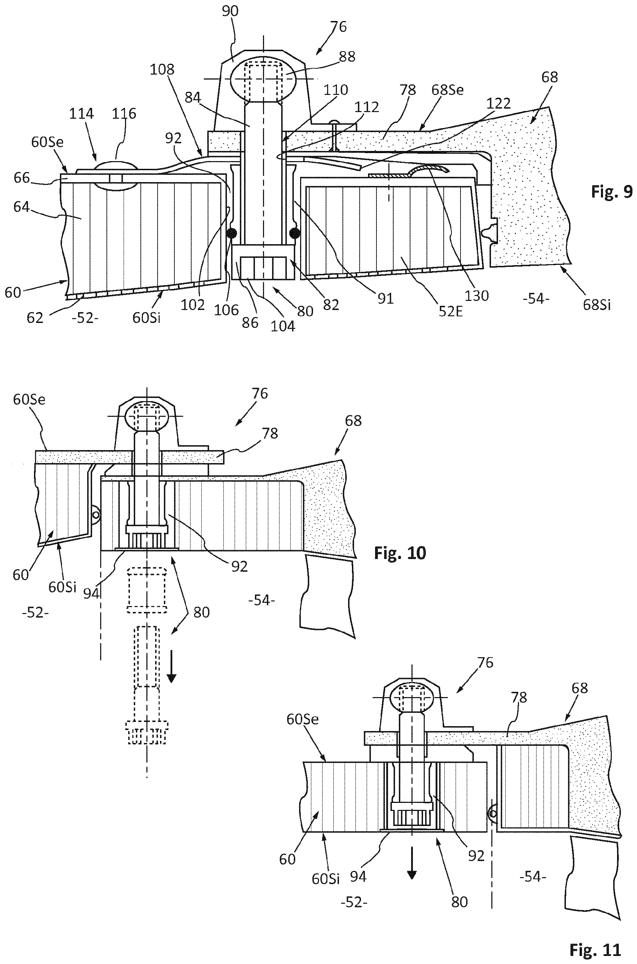

- la figure 9 est une coupe d'une partie supérieure et avant d'une nacelle d'un aéronef qui illustre une autre variante de l'invention, et
- la figure 10 est une coupe d'une partie supérieure et avant d'une nacelle d'un aéronef qui illustre une autre variante de l'invention,
- la figure 11 est une coupe d'une partie supérieure et avant d'une nacelle d'un aéronef qui illustre une autre variante de l'invention.

Comme pour l'art antérieur, une nacelle d'aéronef selon l'invention comprend à l'avant une entrée d'air 50 avec un premier conduit 52 configuré pour canaliser un flux d'air en direction d'un deuxième conduit 54 d'une motorisation 56 disposé dans le prolongement du premier conduit.

Le premier conduit 52 comprend au moins un panneau acoustique 60, généralement plusieurs panneaux acoustiques 60 juxtaposés sur la circonférence du premier conduit 52. Chaque panneau acoustique 60 comprend selon la direction radiale, en s'écartant de l'axe de la motorisation, une couche acoustiquement résistive 62, au moins une couche alvéolaire 64 et une couche réflectrice 66.

Chaque panneau acoustique 60 comprend une surface intérieure 60Si en contact avec le flux d'air qui s'écoule dans le premier conduit 52 et une surface extérieur 60Se opposée à la surface intérieure 60Si.

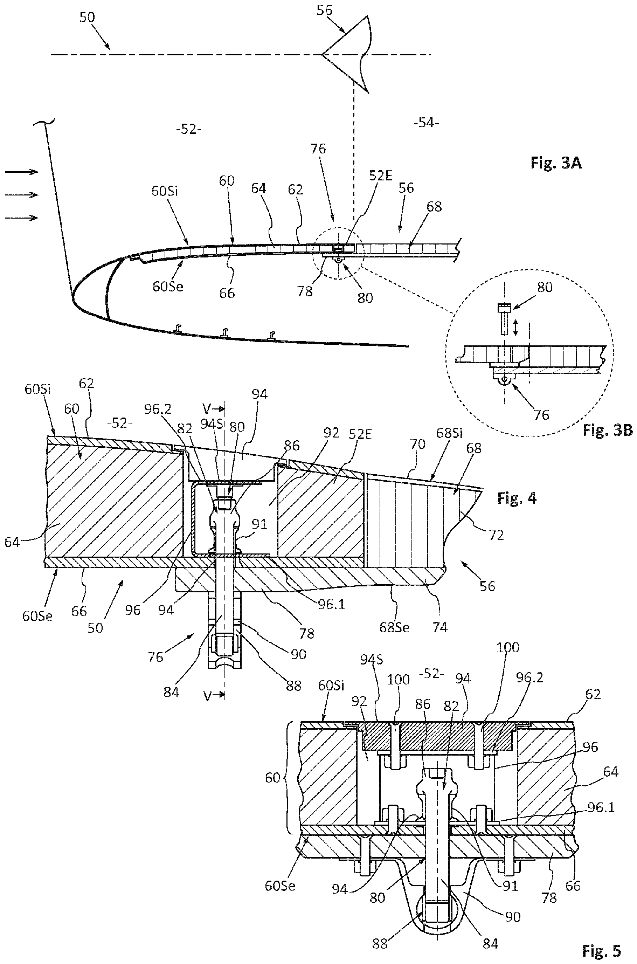

Généralement, le deuxième conduit 54 comprend au moins un panneau 68, généralement plusieurs panneaux 68 juxtaposés sur la circonférence du deuxième conduit 54. Selon une configuration illustrée par la figure 4, les panneaux 68 sont des panneaux acoustiques qui comprennent chacun selon la direction radiale, en s'écartant de l'axe de la motorisation, une couche acoustiquement résistive 70, au moins une couche alvéolaire 72 et une couche réflectrice 74 appelée également par la suite paroi extérieure 74.

Chaque panneau 68 comprend une surface intérieure 68Si en contact avec le flux d'air qui s'écoule dans le deuxième conduit 54 et une surface extérieure 68Se opposée à la surface intérieure 68Si.

Les panneaux acoustiques 62 ne sont pas plus détaillés car ils sont connus de l'homme du métier. Il en est de même pour les panneaux 68 du deuxième conduit 54 qui sont connus sous la dénomination « Fan case » en anglais.

L'entrée d'air 50 et la motorisation 56 sont reliées par une liaison 76 qui comprend un manchon 78 solidaire du deuxième conduit 54, configuré pour recevoir une extrémité du premier conduit 52 ainsi que des éléments de liaison 80 qui relient le manchon 78 et le premier conduit 52, qui sont répartis sur toute la circonférence de la nacelle et qui comprennent des tiges qui sont orientées radialement.

Selon une autre variante visible sur la figure 10, le manchon 78 est solidaire du premier conduit 52, le deuxième conduit 54 s'emmanche dans le manchon 78 et les éléments de liaison 80 relient le manchon 78 et le deuxième conduit 54.

Par solidaire du premier conduit 52 ou du deuxième conduit 54, on entend que le manchon 78 est réalisé d'un seul tenant avec le premier ou deuxième conduit 52 ou 54 ou avec au moins une des couches du premier ou deuxième conduit 52 ou 54.

Selon l'invention, le premier conduit 52 de l'entrée d'air 50 et le deuxième conduit 54 de la motorisation 56 sont reliés par seulement une série d'éléments de liaison 80. De plus le premier conduit 52, le deuxième conduit 54 et le manchon 78 peuvent être réalisés en matériau composite dans la mesure où le manchon 78 est orienté longitudinalement dans le prolongement d'un des deux conduits 52, 54.

Selon un mode de réalisation, la paroi extérieure 74 de chaque panneau 68 s'étend vers l'avant de la nacelle par rapport au reste du panneau 68. Ainsi, les parois extérieures 74 des panneaux 68 forment un manchon 78 configuré pour recevoir l'extrémité 52E des panneaux acoustiques 60 du premier conduit 52. Le manchon 78 est espacé de la surface intérieure 68Si de chaque panneau 68 d'une distance supérieure ou égale à la hauteur (distance mesurée selon la direction radiale) de l'extrémité 52E des panneaux acoustiques 60 du premier conduit 52 pour que les surfaces intérieures 68Si des panneaux 68 du deuxième conduit 54 soient dans le prolongement des surfaces intérieures 60Se des panneaux acoustiques 60 du premier conduit 52.

Chaque élément de liaison 80 est un boulon qui comprend d'une part une vis 82 avec une tige filetée 84 orientée selon la direction radiale et une tête 86, et d'autre part, un écrou 88 configuré pour permettre le vissage de la tige filetée 84.

Selon une caractéristique de l'invention, l'écrou 88 est relié au manchon 78 par un système d'immobilisation en rotation dudit écrou 88 autour d'un axe de rotation radial, pour permettre le vissage et le serrage de la vis 82 sans avoir besoin d'immobiliser en rotation l'écrou 88 avec un outil.

Selon un mode de réalisation, l'écrou 88 est relié directement à la surface extérieure du manchon 78, par exemple par rivetage, par sertissage ou autre.

Selon un autre mode de réalisation visible par exemple sur les figures 4 et 5, l'écrou 88 est un écrou à manchon (de type « barrel nut » en anglais) et il est immobilisé en rotation dans un support 90 qui est lui-même relié à la surface extérieure du manchon 78.

Les éléments de liaison 80 peuvent comprendre chacun un fourreau 91 déformable en compression positionné autour de la tige filetée 84.

La tête 86 de chaque élément de liaison 80 est noyée dans la couche acoustiquement résistive 62 et/ou la couche alvéolaire 64 des panneaux acoustiques 60.

Selon un mode de réalisation visible sur les figures 4 et 5, pour chaque élément de liaison 80, la couche acoustiquement résistive 62 et la couche alvéolaire 64 comprennent un évidement 92 configuré pour loger la tête 86. La couche réflectrice 66 comprend un trou de passage 94 avec une section inférieure à la tête 86 de l'élément de liaison 80.

Selon d'autres modes de réalisation visibles sur les figures 6 à 8, pour chaque élément de liaison 80, le panneau acoustique 60 comprend un évidement 92 qui traverse le panneau acoustique 60 et qui a sensiblement la même section sur toute la hauteur du panneau acoustique 60.

Les évidements 92 sont disjoints et ont une section la plus réduite possible pour ne pas trop altérer le traitement acoustique.

Pour assurer une continuité de la surface intérieure 60Si et une étanchéité, chaque panneau acoustique 60 comprend, pour chaque évidement 92, un bouchon 94 pourvu d'une surface 94S affleurant la surface intérieure 60Si du panneau acoustique 60 et relié par tout moyen approprié au panneau acoustique 60.

Selon un mode de réalisation, chaque bouchon 94 est relié au panneau acoustique 60 par collage, rivetage.

Selon un autre mode de réalisation visible sur les figures 4 et 5, chaque bouchon 94 est relié au panneau acoustique 60 par un support 96 en C comportant une première aile 96.1 reliée à la couche réflectrice 66 par des vis ou des rivets 98 et une seconde aile 96.2 reliée au bouchon 94 par des vis ou des rivets 100.

Selon un autre mode de réalisation illustré par la figure 8, chaque évidement 92 comprend un chant périphérique 102 avec une section sensiblement égale à celle de la tête 86 de l'élément de liaison 80. Pour assurer la continuité de la surface intérieure 60Si du panneau acoustique 60, la tête 86 de l'élément de liaison 80 comprend une surface 104 dans le prolongement de la surface intérieure 60Si du panneau acoustique 60. Pour assurer l'étanchéité, un joint torique 106 est intercalé entre l'élément de liaison 80 et le chant périphérique 102 de l'évidement 92.

Selon un autre mode de réalisation visible sur la figure 11, le bouchon 94 est un capuchon avec une paroi latérale cylindrique qui s'emmanche dans l'évidement 92.

Selon une première variante illustrée par les figures 4 et 5, le premier conduit 52 est relié directement au manchon 78 par les éléments de liaison 80.

Selon d'autres variantes illustrées par les figures 6 à 8, le premier conduit 52 est relié au manchon 78 par l'intermédiaire d'au moins une lame de liaison 108 disposée entre le premier conduit 52 et le manchon 78.

Par lame, on entend une pièce qui a une épaisseur (dimension prise selon la direction radiale) nettement inférieure à sa largeur (dimension prise selon la circonférence) et/ou sa longueur (dimension prise dans la direction longitudinale).

Selon une configuration, la liaison 76 entre l'entrée d'air 50 et la motorisation 56 comprend plusieurs lames de liaison 108 qui sont réparties sur toute la circonférence du premier conduit 52. De préférence, les lames de liaison 108 s'étendent sur des secteurs angulaires θ identiques pour équilibrer les efforts.

A titre d'exemple, la liaison 76 comprend trois lames de liaison 108 qui s'étendent chacune sur un secteur angulaire d'environ 120°.

Chaque lame de liaison 108 comprend au moins une première zone de jonction 110 écartée du premier conduit 52 selon la direction radiale et configurée pour relier la lame de liaison 108 et le manchon 78 et au moins une deuxième zone de jonction 114, décalée selon la direction longitudinale par rapport à la première zone de jonction 110, configurée pour relier la lame de liaison 108 et le premier conduit 52.

Chaque première zone de jonction comprend un orifice de passage 112 configuré pour loger la tige filetée 84 de l'élément de liaison 80. Chaque deuxième zone de jonction 114 comporte au moins un élément de fixation 116, comme par exemple un rivet, pour relier la lame de liaison 108 et le premier conduit 52.

Chaque lame de liaison 108 est configurée pour se déformer en fonctionnement de manière élastique selon la direction radiale. Ainsi, pour chaque lame de liaison 108, la première zone de jonction 110 peut se déplacer selon la direction radiale par rapport à la deuxième zone de jonction 114 lorsqu'un effort, orienté selon la direction radiale et ne dépassant pas un seuil donné, est exercé entre les premier et deuxième conduits 52, 54.

Selon une variante illustrée par la figure 7, chaque lame de liaison 108 comprend une troisième zone de jonction 118 qui est reliée au premier conduit 52 par au moins un élément de fixation 120 (représenté schématiquement par un trait d'axe), comme par exemple un rivet, les deuxième et troisième zones de jonction 114 et 118 étant disposées de part et d'autre de la première zone de jonction 110.

Selon une autre variante illustrée par la figure 8, les deuxièmes zones de jonction 114 sont disposées à l'avant des premières zones de jonction 110 et chaque lame de liaison 108 comprend un bord 122 orienté vers l'arrière de la nacelle qui est libre et non relié au premier conduit 52.

Selon une configuration visible sur la figure 8, la lame de liaison 108 n'assure que la liaison 76 entre le premier conduit 52 et le manchon 78.

Selon une autre configuration visible sur les figures 6 et 7, la lame de liaison 108 comprend une extension 124 reliée à un cadre 126. Dans ce cas, la lame de liaison 108 n'est pas dédiée qu'à la liaison 76 entre le premier conduit 52 et le manchon 78.

Pour relier les premiers et deuxième conduits 52, 54, les lames de liaison 108 sont fixées au premier conduit 52. En suivant, le premier conduit 52 pourvu des lames de liaison 108 est emmanché dans le manchon 78. De préférence, le bord 122 orienté vers le deuxième conduit 54 est recourbé pour favoriser l'introduction des lames de liaison 108 fixées sur le premier conduit 52. Enfin, les vis 82 sont mises en place et serrées depuis l'intérieur des premier et deuxième conduits 52 et 54.

Les lames de liaison 108 favorisent le centrage du premier conduit 52 par rapport au deuxième conduit 54 lors du montage. En fonctionnement, les lames de liaison 108 limitent en se déformant la propagation des contraintes entre les premier et deuxième conduits 52, 54.

Selon une variante visible sur la figure 9, la liaison 76 comprend un centreur 130 relié au conduit 52 qui favorise le centrage du premier conduit 52 par rapport au manchon 78. Le centreur 130 comprend une pluralité de lames élastiques réparties sur la périphérie du premier conduit 52.

## Revendications

1. Nacelle d'aéronef comprenant un conduit solidaire d'une entrée d'air (50) et un conduit solidaire d'une motorisation (56), le conduit solidaire de l'entrée d'air (50) étant configuré pour canaliser un flux d'air en direction du conduit solidaire de la motorisation (56) disposé dans le prolongement du conduit solidaire de l'entrée d'air (50), une liaison (76) entre le conduit solidaire de l'entrée d'air (50) et le conduit solidaire de la motorisation (56), la liaison (76) comprenant un manchon (78) dans lequel est emmanchée une extrémité d'un premier conduit (52) parmi le conduit solidaire de l'entrée d'air (50) et le conduit solidaire de la motorisation (56), ledit manchon (78) étant solidaire d'un deuxième conduit (54) parmi le conduit solidaire de l'entrée d'air (50) et le conduit solidaire de la motorisation (56), ledit manchon (78) étant orienté longitudinalement dans le prolongement d'un des deux conduits (52, 54) ainsi que des éléments de liaison (80) qui relient le manchon (78) et le premier conduit (52) et qui sont répartis sur toute la circonférence de la nacelle, **caractérisée en ce que** chaque élément de liaison (80) comprend d'une part une vis (82) avec une tige filetée (84) orientée selon une direction radiale et une tête (86) accessible depuis l'intérieur du premier conduit (52) et d'autre part, un écrou (88) vissé sur la tige filetée (84) et qui est relié au manchon (78) par un système d'immobilisation en rotation dudit écrou (88) autour d'un axe de rotation radial.

2. Nacelle d'aéronef selon la revendication 1, **caractérisée en ce que** l'écrou (88) est relié directement à une surface extérieure du manchon (78).

3. Nacelle d'aéronef selon la revendication 1, **caractérisée en ce que** l'écrou (88) est un écrou à manchon immobilisé en rotation dans un support (90) qui est relié à une surface extérieure du manchon (78).

4. Nacelle d'aéronef selon l'une des revendications précédentes, **caractérisée en ce que** le premier conduit (52) comprend au moins un panneau acoustique (60) qui comporte selon la direction radiale, en s'écartant de l'axe de la motorisation (56), une couche acoustiquement résistive (62), au moins une couche alvéolaire (64) et une couche réflectrice (66) et **en ce que** pour chaque élément de liaison (80), au moins la couche acoustiquement résistive (62) et la couche alvéolaire (64) comprennent un évidement (92) configuré pour loger la tête (86) de l'élément de liaison (80).

5. Nacelle d'aéronef selon la revendication 4, **caractérisée en ce que** chaque panneau acoustique (60) comprend, pour chaque évidement (92), un bouchon (94) relié au panneau acoustique (60) et pourvu d'une surface (94S) positionnée dans le prolongement d'une surface intérieure (60Si) du panneau acoustique (60).

6. Nacelle d'aéronef selon la revendication 4, **caractérisée en ce que** chaque évidement (92) comprend un chant périphérique (102) avec une section sensiblement égale à une section de la tête (86) de l'élément de liaison (80), la tête (86) de l'élément de liaison (80) comprenant une surface (104) positionnée dans le prolongement d'une surface intérieure (60Si) du panneau acoustique (60), un joint torique (106) étant intercalé entre l'élément de liaison (80) et le chant périphérique (102) de l'évidement (92).

7. Nacelle d'aéronef selon l'une des revendications précédentes, **caractérisée en ce que** la liaison (76) comprend au moins une lame de liaison (108) configurée pour relier le premier conduit (52) et le manchon (78) et disposée entre le premier conduit (52) et le manchon (78), chaque lame de liaison (108) comprenant au moins une première zone de jonction (110) configurée pour relier la lame de liaison (108) et le manchon (78) et qui est écartée du premier conduit (52) selon la direction radiale et au moins une deuxième zone de jonction (114) configurée pour relier la lame de liaison (108) et le premier conduit (52) et qui est décalée selon la direction longitudinale par rapport à la première zone de jonction (110).

8. Nacelle d'aéronef selon la revendication précédente, **caractérisée en ce que** chaque lame de liaison (108) est configurée pour se déformer en fonctionnement de manière élastique selon la direction radiale.

9. Nacelle d'aéronef selon la revendication 7 ou 8, **caractérisée en ce que** chaque lame de liaison (108) comprend une troisième zone de jonction (118) configurée pour relier la lame de liaison (108) et le premier conduit (52), les deuxième et troisième zones de jonction (114, 118) étant disposées de part et d'autre de la première zone de jonction (110).

10. Nacelle d'aéronef selon la revendication 7 ou 8, **caractérisée en ce que** les deuxièmes zones de jonction (114) sont disposées à l'avant de la nacelle par rapport aux premières zones de jonction (110) et **en ce que** chaque lame de liaison (108) comprend un bord (122) orienté vers l'arrière de la nacelle qui est libre.

11. Nacelle d'aéronef selon l'une des revendications 7 à 10, **caractérisée en ce que** chaque lame de liaison (108) comprend un bord orienté vers le deuxième conduit (54) recourbé.

## Patentansprüche

1. Gondel eines Luftfahrzeugs, die einen mit einem Lufteinlass (50) verbundenen Kanal und einen mit einer Motorisierung (56) verbundenen Kanal aufweist, wobei der mit dem Lufteinlass (50) verbundene Kanal dazu eingerichtet ist, eine Luftströmung zu dem mit der Motorisierung (56) verbundenen Kanal zu kanalisieren, der in der Verlängerung des mit dem Lufteinlass (50) verbundenen Kanals angeordnet ist, und eine Verbindung (76) zwischen dem mit dem Lufteinlass (50) verbundenen Kanal und dem mit der Motorisierung (56) verbundenen Kanal aufweist, wobei die Verbindung (76) einen Stutzen (78) aufweist, in den ein Ende eines ersten Kanals (52) zwischen dem mit dem Lufteinlass (50) verbundenen Kanal und dem mit der Motorisierung (56) verbundenen Kanal eingesetzt ist, wobei der Stutzen (78) mit einem zweiten Kanal (54) verbunden ist, der zwischen dem mit dem Lufteinlass (50) verbundenen Kanal und dem mit der Motorisierung (56) verbundenen Kanal liegt, und wobei der Stutzen (78) in Längsrichtung entlang der Verlängerung eines der beiden Kanäle (52, 54) ausgerichtet ist, und die Verbindungselemente (80) aufweist, die den Stutzen (78) und den ersten Kanal (52) verbinden und die über den gesamten Umfang der Gondel verteilt sind, **dadurch gekennzeichnet, dass** jedes Verbindungselement (80) einerseits eine Schraube (82) mit einem in radiale Richtung ausgerichteten Gewindeschaft (84) und einen vom Inneren des ersten Kanals (52) zugänglichen Kopf (86) und andererseits eine Mutter (88) aufweist, die auf den Gewindeschaft (84) aufgeschraubt ist und die mit dem Stutzen (78) durch ein System verbunden ist, das eine Drehung der Mutter (88) um eine radiale Drehachse verhindert.

2. Gondel eines Luftfahrzeugs nach Anspruch 1, **dadurch gekennzeichnet, dass** die Mutter (88) unmittelbar mit einer äußeren Oberfläche des Stutzens (78) verbunden ist.

3. Gondel eines Luftfahrzeugs nach Anspruch 1, **dadurch gekennzeichnet, dass** die Mutter (88) eine Hülsenmutter ist, deren Drehung durch eine Halterung (90) verhindert ist, die mit einer äußeren Oberfläche des Stutzens (78) verbunden ist.

4. Gondel eines Luftfahrzeugs nach einem der vorhergehenden Ansprüche, **dadurch gekennzeichnet, dass** der erste Kanal (52) wenigstens eine akustische Platte (60) aufweist, die in radiale Richtung mit zunehmendem Abstand von der Achse der Motorisierung (56) eine schalldämpfende Schicht (62), wenigstens eine kammerartige Schicht (64) und eine reflektierende Schicht (66) aufweist und dass für jedes Verbindungselement (80) wenigstens die schalldämpfende Schicht (62) und die kammerartige Schicht (64) eine Ausnehmung (92) aufweisen, die zur Aufnahme des Kopfs (86) des Verbindungselements (80) eingerichtet ist.

5. Gondel eines Luftfahrzeugs nach Anspruch 4, **dadurch gekennzeichnet, dass** jede akustische Platte (60) für jede Ausnehmung (92) eine Abdeckung (94) aufweist, die mit der akustischen Platte (60) verbunden ist und mit einer Oberfläche (94S) versehen ist, die in der Verlängerung einer inneren Oberfläche (60Si) der akustischen Platte (60) angeordnet ist.

6. Gondel eines Luftfahrzeugs nach Anspruch 4, **dadurch gekennzeichnet, dass** jede Ausnehmung (92) eine Umfangskante (102) aufweist, deren Querschnitt im Wesentlichen gleich dem Querschnitt des Kopfs (86) des Verbindungselements (80) ist, wobei der Kopf (86) des Verbindungselements (80) eine Oberfläche (104) aufweist, die in der Verlängerung einer inneren Oberfläche (60Si) der akustischen Platte (60) angeordnet ist und wobei ein O-Ring (106) zwischen das Verbindungselement (80) und die Umfangskante (102) der Ausnehmung (92) eingebracht ist.

7. Gondel eines Luftfahrzeugs nach einem der vorhergehenden Ansprüche, **dadurch gekennzeichnet, dass** die Verbindung (76) wenigstens einen Verbindungsstreifen (108) aufweist, der dazu eingerichtet ist, den ersten Kanal (52) und den Stutzen (78) zu verbinden und zwischen dem ersten Kanal (52) und dem Stutzen (78) angeordnet ist, wobei jeder Verbindungsstreifen (108) wenigstens einen ersten Verbindungsbereich (110) aufweist, der dazu eingerichtet ist, den Verbindungsstreifen (108) und den Stutzen (78) zu verbinden, und der in radiale Richtung vom ersten Kanal (52) entfernt ist, und wenigstens einen zweiten Verbindungsbereich (114) aufweist, der dazu eingerichtet ist, den Verbindungsstreifen (108) und den ersten Kanal (52) zu verbinden und der in longitudinale Richtung bezüglich des ersten Verbindungsbereichs (110) versetzt ist.

8. Gondel eines Luftfahrzeugs nach dem vorhergehenden Anspruch, **dadurch gekennzeichnet, dass** jeder Verbindungsstreifen (108) dazu eingerichtet ist, sich beim Betrieb in radiale Richtung auf elastische Weise zu verformen.

9. Gondel eines Luftfahrzeugs nach Anspruch 7 oder 8, **dadurch gekennzeichnet, dass** jeder Verbindungsstreifen (108) einen dritten Verbindungsbereich (118) aufweist, der dazu eingerichtet ist, den Verbindungsstreifen (108) und den ersten Kanal (52) zu verbinden, wobei der zweite und dritte Verbindungsbereich (114, 118) beiderseits des ersten Verbindungsbereichs (110) angeordnet sind.

10. Gondel eines Luftfahrzeugs nach Anspruch 7 oder 8, **dadurch gekennzeichnet, dass** die zweiten Verbindungsbereiche (114) bezüglich der ersten Verbindungsbereiche (110) im vorderen Bereich der Gondel angeordnet sind und dass jeder Verbindungsstreifen (108) einen Rand (122) aufweist, der dem hinteren Bereich der Gondel zugewandt ist und frei ist.

11. Gondel eines Luftfahrzeugs nach einem der Ansprüche 7 bis 10, **dadurch gekennzeichnet, dass** jeder Verbindungsstreifen (108) einen dem zweiten Kanal (54) zugewandten gekrümmten Rand aufweist.

## Claims

1. Aircraft nacelle including a conduit rigidly connected to an air inlet (50) and a conduit rigidly connected to an engine (56), the conduit rigidly connected to the air inlet (50) being designed to channel an air flow towards the conduit rigidly connected to the engine (56) disposed in the extension of the conduit rigidly connected to the air inlet (50), a link (76) between the conduit rigidly connected to an air inlet (50) and the conduit rigidly connected to an engine (56), the link (76) comprising a sleeve (78) designed to receive one end of a first conduit (52) that is either the conduit rigidly connected to the air inlet (50) or the conduit rigidly connected to the engine (56), said sleeve (78) being rigidly connected to a second conduit (54) that is either the conduit rigidly connected to the air inlet (50) or the conduit rigidly connected to the engine (56), said sleeve (78) being oriented longitudinally in the extension of one of the two conduits (52, 54), as well as linking elements (80) that link the sleeve (78) and the first conduit (52) and that are distributed about the entire circumference of the nacelle, **characterized in that** each linking element (80) comprises firstly a screw (82) with a threaded stem (84) that is oriented in a radial direction and a head (86) that is accessible from the inside of the first conduit (52), and secondly a nut (88) that is screwed onto the threaded stem (84) and that is linked to the sleeve (78) by a system for preventing said nut (88) from rotating about a radial axis of rotation.

2. Aircraft nacelle according to claim 1, wherein the nut (88) is linked directly to an outer surface of the sleeve (78).

3. Aircraft nacelle according to claim 1, wherein the nut (88) is a barrel nut prevented from rotating in a supporting element (90) that is linked to an outer surface of the sleeve (78).

4. Aircraft nacelle according to one preceding claims, wherein the first conduit (52) has at least one acoustic panel (60) comprising an acoustically resistive layer (62), at least one honeycomb layer (64) and one reflective layer (66) arranged in the radial direction moving away from the center line of the engine (56) and in that, for each linking element (80), at least the acoustically resistive layer (62) and the honeycomb layer (64) have a recess (92) designed to receive the head (86) of the linking element (80).

5. The aircraft nacelle as claimed in claim 4, wherein each acoustic panel (60) has, for each recess (92), a stopper (94) that is linked to the acoustic panel (60) and that has a surface (94S) extending an inner surface (60Si) of the acoustic panel (60).

6. The aircraft nacelle as claimed in claim 4, wherein each recess (92) has a peripheral rim (102) having a section substantially identical to a section of the head (86) of the linking element (80), the head (86) of the linking element (80) having a surface (104) extending an inner surface (60Si) of the acoustic panel (60), an O-ring (106) being positioned between the linking element (80) and the peripheral rim (102) of the recess (92).

7. The aircraft nacelle as claimed in any one of the preceding claims, wherein the link (76) has at least one linking strip (108) that is designed to link the first conduit (52) and the sleeve (78) and that is arranged between the first conduit (52) and the sleeve (78), each linking strip (108) having at least one first joining zone (110) that is designed to link the linking strip (108) and the sleeve (78) and that is offset from the first conduit (52) in the radial direction and at least one second joining zone (114) that is designed to link the linking strip (108) and the first conduit (52) and that is offset in the longitudinal direction in relation to the first joining zone (110).

8. The aircraft nacelle as claimed in the preceding claim, wherein each linking strip (108) is designed to deform elastically in the radial direction when in operation.

9. The aircraft nacelle as claimed in claim 7 or 8, wherein each linking strip (108) has a third joining zone (118) that is designed to link the linking strip (108) and the first conduit (52), the second and third joining zones (114, 118) being arranged on either side of the first joining zone (110).

10. The aircraft nacelle as claimed in claim 7 or 8, wherein the second joining zones (114) are arranged at the front of the nacelle in relation to the first joining zones (110) and in that each linking strip (108) includes an edge (122) oriented towards the rear of the nacelle that is free.

11. The aircraft nacelle as claimed in any one of the claims 7 to 10, wherein each linking strip (108) has an curved edge oriented towards the second conduit (54).
